# EUROPÄISCHE PATENTANMELDUNG

(11) **EP 1 692 928 A2**
(43) Veröffentlichungstag der Anmeldung: **23.08.2006**
(21) Anmeldenummer: 06000682.2
(22) Anmeldetag: 13.01.2006
(51) Int. Cl.: A01B 79/00

(54) **Elektronisches Maschinen-Management-System**

(30) Priorität: 21.02.2005 DE 5008105
(71) Anmelder: AGROCOM GmbH & Co. Agrarsystem KG, 33719 Bielefeld (DE)
(72) Erfinder: Scheufler, Bernd, Dr., 49205 Hasbergen (DE); Marquering, Johannes, Dr., 49176 Borgloh (DE); Quinckhardt, Michael, Dr., 48231 Warendorf (DE); Autermann, Ludger, 49317 Drensteinfurt (DE)

(57) **Zusammenfassung**

Elektronisches Maschinen-Management-System zum Positionsgenauen Einleiten von Schalt- und Stellvorgängen bei landwirtschaftlichen Arbeitsmaschinen, die ein geographisches Modul zum Ermitteln der aktuellen Position und aus der Informationen über Positionen von markanten Felddaten, Ausbringmengen, Feldgrenzen, bearbeitete und/oder Sperrflächen, etc. enthält, und einem maschinenspezifischen Modul, welches maschinenspezifische Funktionen enthält, wobei das geographisches Modul dem maschinenspezifischen Modul die geographischen Informationen in Echtzeit mitteilt und das maschinenspezifische Modul hieraus in Echtzeit die maschinenspezifischen Schalt- und Stellvorgänge generiert und entsprechende Signale an die jeweiligen Schalt- und Stellelemente sendet.

## Beschreibung

Die Erfindung betrifft ein elektronisches Maschinenmanagementsystem.

Landwirtschaftliche Arbeitsmaschinen sind mit Bordcomputersystemen ausgerüstet, mit denen Schalt- und Stellvorgänge bei landwirtschaftlichen Maschinen positionsgenau eingeleitet und/oder durchgeführt werden können. Diese Bordcomputer weisen ein auf Satellitennavigation basierendes Standortbestimmungssystem (GPS) auf, mit denen die tatsächliche Position der Arbeitsmaschinen auf dem abzuarbeitenden Feld in Echtzeit bestimmt werden kann. Bisher sind die Bordcomputersysteme speziell für eine einzige Arbeitsmaschine oder für eine Gruppe von Arbeitsmaschinen eines Herstellers ausgelegt. Teilweise sind sogar zusätzlich noch die Arbeitsmaschinen tragenden oder ziehenden Ackerschlepper mit einem zusätzlichen bzw. eigenen Bordcomputersystem ausgestattet, welches jedoch nicht in der Lage ist, die angehängten oder angekoppelten Arbeitsmaschinen Stellvorgänge einzuleiten oder diese zu steuern oder zu regeln. Dieses wird von dem vorerwähnten Bordcomputer, der speziell auf die jeweilige Arbeitsmaschine oder eine Gruppe von Arbeitsmaschinen abgestimmt ist, durchgeführt.

Der Erfindung liegt die Aufgabe zugrunde, hier Abhilfe zu schaffen und ein universelles Maschinenmanagementsystem miteinander korrespondierendes Bordcomputersystem zu schaffen.

Diese Aufgabe wird erfindungsgemäß durch die Merkmale des Patentanspruches 1 gelöst. Infolge dieser Maßnahmen wird quasi dem Ackerschlepper ein geographisches Modul und der Arbeitsmaschine ein maschinenspezifisches Modul des elektronischen Maschinenmanagementsystems zugeordnet. Erfindungsgemäß korrespondieren das geographische und maschinenspezifische Modul miteinander und bilden so den Bordcomputer. Das geographische Modul liefert Informationen über Position und entsprechend hinterlegter Daten, Informationen, wie markanter Felddaten, Sperrflächen etc, beispielsweise aus der hinterlegten Farmmanagementsoftware. Das maschinenspezifische Modul leitet dann entsprechend der hinterlegten Daten über die Maschine die jeweils erforderliche Aktion zum richtigen Zeitpunkt oder am richtigen Ort ein. Das maschinenspezifische Modul generiert die erforderlichen Maschinenschaltvorgänge, wie Einschalten und/oder Einstellen der Dosierorgane, Ein- oder Ausklappen der Verteilergestänge, Anheben oder Absenken der Maschine oder der Arbeitswerkzeuge der Maschine.

Die Korrespondenz zwischen den beiden Modulen ist erforderlich, weil dem maschinenspezifischen Modul nicht bekannt ist, welche Schaltvorgänge an der Maschine durchgeführt werden sollen. Andererseits ist dem Maschinenspezifischen Modul nicht bekannt, an welcher Position sich die Maschine gerade auf dem Feld befindet und was als nächstes aufgrund der markanten Felddaten etc. an der Maschine zu betätigen ist. Es weiß z.B. nicht wie weit das Vorgewende oder ein anderes Ereignis noch weg ist. Das maschinenspezifische Modul braucht die geometrischen Informationen von dem geographischen Modul und generiert daraus die entsprechenden maschinenspezifischen Vorgänge.

Die geografischen und maschinenspezifischen Module tauschen in einer Ausgestaltungsvariante sich über die geometrischen Eigenschaften der Maschine bzw. der Position der GPS-Antenne aus, damit entweder das maschinenspezifische Modul sich eine virtuelle Antennenposition errechnen kann bzw. das geografische Modul die aktuelle Position maschinenrelevant korrigieren kann. Z.B. sitzt das Maschinenaggregat 5 m hinter und 3m rechts von der Antennenposition versetzt dazu. Hier errechnet dann das geografische Modul die aktuelle Position dieses Aggregates, da es die Entfernungen zur GPS-Antenne und Richtung kennt. Es ist aber auch möglich, dass das maschinenspezifische Modul diese zusätzlichen Informationen (Richtung und Antennendistanzen) erhält und die Position berechnet.

Mittels des elektronischen Maschinen- und Managementsystems, wie vor beschrieben, können u. a. auf die folgenden Positionen und/oder Situationen bezogene Handelsaktionen durchgeführt werden.

Es kann eine markante Stelle erkannt werden. Das geografische Modul erkennt die markanten Stellen dadurch, dass es die geometrischen Abmessungen vom angeschlossenen Gerät erhält. Mit Hilfe der gemessenen GPS-Position, der Richtung und/oder der Fahrgeschwindigkeit kann die "kommende" Bearbeitungsfläche auf markante Stellen überwacht werden. Markante Stellen sind z.B. Vorgewendeflächen, Hindernisse, schon bearbeitete Flächen, Flächen zur besonderen Bearbeitung, z.B. Randstreifen, wo nur reduziert gespritzt oder gedüngt werden darf und Sperrflächen.

Das geografische Modul kann die geometrischen Abmessungen des Arbeitsgeräts von dem maschinenspezifischen Modul erhalten. Mit der geografischen Abmessung des Gerätes ist die Arbeitsbreite der gesamten Maschine, wie die Arbeitsbreiten der weiteren Maschinen mit ihren Eigenschaften (z.B. einklappbar, aushebbar) gemeint. Diese Infos sind in der Farmmanagementsoftware oder im geographischen Modul hinterlegt und werden dann dem maschinenspezifischen Modul mitgeteilt. Es erfolgt eine permanente Überwachung der GPS-Position mit Richtung und/oder Fahrgeschwindigkeit. Die GPS-Position, die Richtung und/oder die Fahrgeschwindigkeit sind zu messende Größen und können mit dem GPS-Empfänger und/oder der Onboard-Sensorik ermittelt werden.

Des Weiteren wird die kommende Bearbeitungsfläche überwacht. Aus GPS-Position, Richtung und/oder Fahrgeschwindigkeit kann die "kommende" Bearbeitungsfläche vorausberechnet werden und die markanten Stellen werden erkannt. Die Information der markanten Stellen erhält das maschinenspezifische Modul des Anbaugerätes oder Anhängegerätes vom geografischen Modul und reagiert situationsbezogen darauf. Im einfachsten Fall wird nur die Differenz zeitlich oder räumlich dem maschinenspezifischen Moduls des Anbaugerätes mitgeteilt. Handelt es sich um eine Vorgewendefläche, wird beim Eintreffen des Ereignisses die Vorgewendeautomatik bzw. Sequenz gestartet. Handelt es sich um eine Sperrfläche, werden diese Aggregate situationsbezogen ab- oder zugeschaltet. Handelt es sich um ein Hindernis, wird auch dieses dem maschinenspezifischen Modul des Gerätes mitgeteilt und es handelt situationsbezogen, in dem das Gestänge eingeklappt, die Stellorgane oder Schaltorgane der Dosierorgane betätigt oder das Aggregat ausgehoben wird. Wird eine bereits abgearbeitete Fläche erkannt, wird durch zu- bzw. abschalten von Teilaggregaten eine doppelte Bearbeitung vermieden. Dieses ist z.B. bei keilförmigen Flächen der Fall.

Es erfolgt eine kontinuierliche Mitteilung Entfernung (Weg-Zeit) zur markanten Stelle durch das geografische Modul an das maschinenspezifische Modul. Hierbei wird dem maschinenspezifische Modul mitgeteilt, wie die zeitliche oder geografische Distanz zu der markanten Stelle ist. Durch eine entsprechend hinterlegte Intelligenz im maschinenspezifischen Modul kann durch dieses die entsprechend Aktion eingeleitet und/oder ausgeführt werden.

Wird als markante Stelle von dem geografischen Modul ein Vorgewende erkannt, kann das maschinenspezifische Modul für die Maschine situationsbezogen die Vorgewendeautomatik oder eine Sequenz starten. Das Gleiche gilt auch für Verlassen des Vorgewendes. Diese kann je nach Anbaugerät mit einem eingestellten bzw. aus dem maschinenspezifischen Modul des Gerätes erhaltenen Zeit- oder Positionsversatz geschehen. Dieser kann vor- oder nacheilend sein.

Handelt es sich bei der markanten Stelle um z.B. Querflächen oder anderer markanter Flächen, können ähnlich wie im Vorgewende über das maschinenspezifische Modul die Maschine oder Maschinenteile automatisch ein- oder ausgeschaltet werden.

Des Weiteren kann die Maschine oder das Arbeitsgerät durch das Zusammenwirken der geografischen und maschinenspezifischen Module Hindernisse, die im Feld vorhanden sind, ausweichen. Hindernisdaten enthalten neben der Position des Hindernisses im Feld auch noch spezifische Parameter, wie z. B. umfahrbar, überfahrbar, Gefahrenabstand etc.. Aufgrund dieser Information kann das maschinenspezifische Modul z.B. Aggregate der Maschine ausheben bzw. die Ausleger der Maschine einklappen, Dosierorgan abschalten.

Des Weiteren kann die bearbeitete Fläche permanent in den geografischen oder maschinenspezifischen Modulen aufgezeichnet werden.

Wird als markante Stelle die bereits abgearbeitete Fläche erkannt, wird sie zur Vermeidung von Doppelverarbeitung wie eine Sperrfläche angesehen und das maschinenspezifische Modul kann entsprechend reagieren. Hierbei kommt es häufig zu keilförmigen Arbeitsflächen, wo das maschinenspezifische Modul das Gerät je nach den Möglichkeiten des Gerätes schrittweise automatisch von außen nach innen oder eine zur anderen Seite abschalten kann.

Weiterhin ist in dem maschinenspezifischen Modul eine Fahrgassenschaltautomatik hinterlegt. Mit dieser Funktion wird automatisch die Fahrgassensequenz erkannt und der Maschine dementsprechend übergeben. Die Informationen der Fahrgassensequenz kommt entweder aus der Farmmanagementsoftware oder wird "on the go" auf dem Feld erzeugt. Die Fahrgassen können natürlich auch in dem maschinenspezifischen Modul aufgezeichnet werden, um z.B. für Folgearbeiten, wie z.B. Spritzen oder Düngerstreuen diese Daten als Abbearbeitungs- bzw. als Lenkempfehlung für den Schlepper, der die Arbeitsmaschine trägt oder zieht, zu nutzen.

Ist kein Fahrgassenmodell als Modell aus der Farmmanagementsoftware vorgegeben, kann auf dem Feld automatisch die Fahrgassensequenz ermittelt werden. Eingangsgrößen hierzu sind die aktuelle GPS-Position und die GPS-Aufzeichnungen der vorherigen Fahrspuren bzw. eine Generierung aus einer umfahrenden Kontur des abzuarbeitenden Feldes. Entsprechende Intelligenz ist in dem Speicher des geografischen oder maschinenspezifischen Moduls hinterlegt.

In einem anderen Fall wird das Fahrgassenmodell aus der Farmmanagementsoftware genommen. Dieses wird z.B. genutzt, um in jedem Jahr wieder die gleichen Fahrgassen zu benutzen.

Es kann auch die Fahrgassensequenz automatisch erkannt werden. Aufgrund der aktuellen Position kann eine Fahrgassensequenz in dem geografischen Modul abgeleitet werden und dem maschinenspezifischen Modul übergeben werden. Das maschinenspezifische Modul kann dann die Aggregate schalten,wie z.B. Spuranreißer, Fahrgassenautomatik oder Vorauflaufmarkierung.

Die Lage der Fahrgassen werden in dem maschinenspezifischen Modul aufgezeichnet und in der Farmmanagementsoftware ausgewertet, damit für die Folgearbeiten diese Informationen verwendet werden können. Weiterhin kann in dem geografischen Modul eine Arbeitsempfehlung hinterlegt sein. Dieses Modul gibt dem Guidance- / Lenksystem die Information des geplanten Abarbeitung und führt die Maschine entsprechend. Die Information der Abarbeitung kann in der Farmmanagementsoftware geplant werden bzw. on the go erzeugt werden.

Es kann in dem geografischen Modul eine Referenzinformatiön aus der Farmmanagementsoftware für das Guidance-/Lenksystem gewonnen werden. Das Planen der Abarbeitungsspur in der Farmmanagementsoftware hat den Zweck, dass z.B. jedes Jahr das Feld identisch abgearbeitet werden kann.

Weiterhin können neue Referenzsolllinien auf dem Feld erzeugt werden. Liegt keine bekannte Abarbeitungsspur vor, kann in dem geografischen Modul die Solllinie auch "on the go" mittels umfahrender Außenkontur automatisch erzeugt werden.

Weitere Einzelheiten der Erfindung sind den übrigen Unteransprüchen und der Beispielsbeschreibung und den Zeichnungen zu entnehmen. Hier zeigen
- Fig. 1: ein Diagramm mit dem in dem graphischen und maschinen Modul hinterlegten Daten,
- Fig. 2: ein abzuarbeitendes Feld mit angelegten Fahrgassen mit angelegten Fahrgassen in schematischer Darstellung und
- Fig. 3: ein weiteres mit Fahrgassen versehenes Feld in schematischer Darstellung.

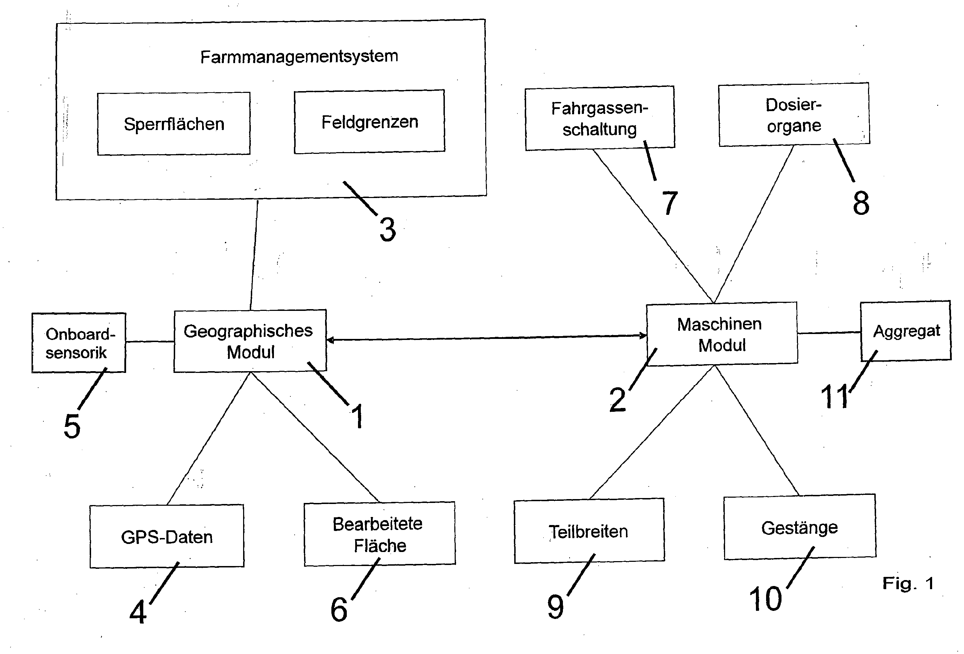

Das elektronische Maschinenmanagementsystem weist, wie Fig. 1 zeigt, ein geographisches Modul 1 das maschinenspezifische Modul 2 auf. In dem geographischen Modul ist die Software des Farmmanagementsystem 3 mit den Sperrflächen und Feldgrenzen sowie die GPS-Daten Modul 4, das Modell der Onboardsensorik, z.B. zur Erfassung der Fahrgeschwindigkeit und das Modul 6 zur Aufzeichnung der bearbeiteten Flächen hinterlegt bzw. sind entsprechende Speicherplätze vorhanden, aus denen diese Daten abrufbar oder abspeicherbar sind. In denn maschinenspezifischen Modul 2 sind unter anderem Daten über die Fahrgassenschaltung 7, Dosierorgane 8, Teilbreiten 9 und Eigenschaften des Gestänges 5 sowie der Aggregate, wie Anheben und Absenken eines Mäh- oder Schneidwerkes, Bodenbearbeitungswerkzeuges hinterlegt.

Mittels dieses Maschinenmanagementsystems können positionsgenau Schalt- und Stellvorgänge bei landwirtschaftlichen Maschinen positionsgenau eingeleitet werden. Das Managementsystem enthält ein geographisches Modul 1 zum Ermitteln der aktuellen Position. Aus der mittels GPS ermittelten aktuellen Position und dem in dem geographischen Modul hinterlegten Daten können Informationen über Positionen von markanten Felddaten, Ausbringmengen, Feldgrenzen, bearbeiteter Flächen und/oder Sperrflächen und weiterer Daten erhalten werden. Des weiteren weist das Managementsystem ein maschinenspezifisches Modul 2 auf, welches maschinenspezifische Funktionen enthält, wie beispielsweise Daten über die Fahrgassenschaltung, Daten und Eigenarten der Dosierorgane, Daten über Teilbreiten der Maschine, Daten und Eigenschaften des Gestänges. Das geographische Modul teilt dem maschinenspezifischen Modul 2 die geographischen Informationen, in Echtzeit ermittelt, das heißt, das geographische Modul ermittelt während des Arbeits- oder Ausbringvorganges seine tatsächliche Position auf dem zu bearbeitenden Feld. Aus den geographischen Informationen, die das geographische Modul 1 dem maschinenspezifischen Modul 2 mitteilt, generiert das maschinenspezifische Modul 2 in Echtzeit die maschinenspezifischen Schalt- und Stellvorgänge und sendet entsprechende Signale an die jeweiligen Schalt-und Stellelemente der Maschine.

Die geographischen Informationen beinhalten zeitliche und/oder geographische Abstände zu Feldgrenzen, benachbarter Fahrgassen, benachbartem Arbeitsbereich, zum Vorgewende, zu Sperrflächen und/oder zu Hindernissen.

In dem Speicher des geographischen Moduls 1 ist ein Programm abgespeichert, welches aufgrund der momentanen Fahrgeschwindigkeit und Richtung vorausschauend die zeitlichen und/oder geographischen Abstände zum nächsten markanten Ereignis berechnet.

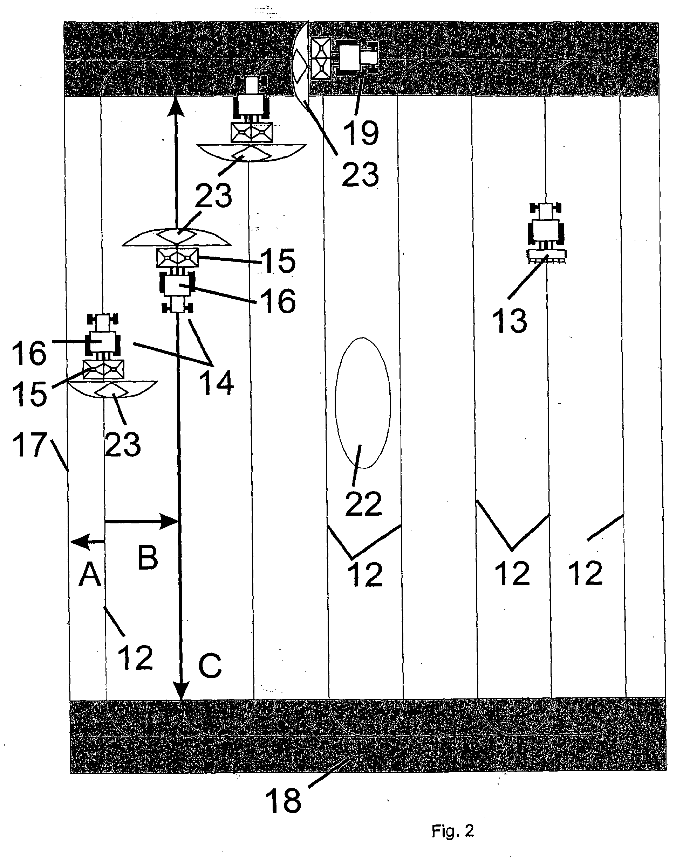

Die Fig. 2 zeigt in schematischer Darstellung ein Feld auf dem die Fahrgassen 12 bei Besäen des Feldes mit einer Sämaschine 13 angelegt worden sind. Das Anlegen der Fahrgassen 12 ist mittels des elektronischen Maschinenmanagementsystems erfolgt. Um die Maschine 14, beispielsweise einen Schleuderdüngerstreuer 15 mit dem Schlepper 16 entlang der Fahrgasse 12 zu steuern, kann das geographische Modul 1 im Ausführungsbeispiel den Abstand A links zur Fahrtrichtung zur Feldrandgrenze 17 zum Hindernis oder zur nächsten Fahrgasse 12 dem Abstand B auf der rechten Seite zur nächsten Fahrgasse 12/Feldrand oder Hindernis ermitteln und dem maschinenspezifischen Modul 2 mitteilen. Des weiteren kann das geographische Modul 1 den Abstand C vorwärts in Fahrtrichtung gesehen zum nächsten Vorgewende 18 als Angabe in Weg, Zeit und Geschwindigkeit ermittelten. Des weiteren kann das geographische Modul 1 den Abstand D rückwärts bis zum letzten Vorgewende 19, als Angabe in Zeit, Weg oder Geschwindigkeit mitteilen. Wenn das Fahrzeug 14, 16 mit der Arbeitsmaschine 15 sich an der Feldrandgrenze 17 oder im Vorgewende 18, 19 befindet, wird dieses von dem geographischen Modul 1 ermittelt und dem maschinenspezifischen Modul 2 mitgeteilt.

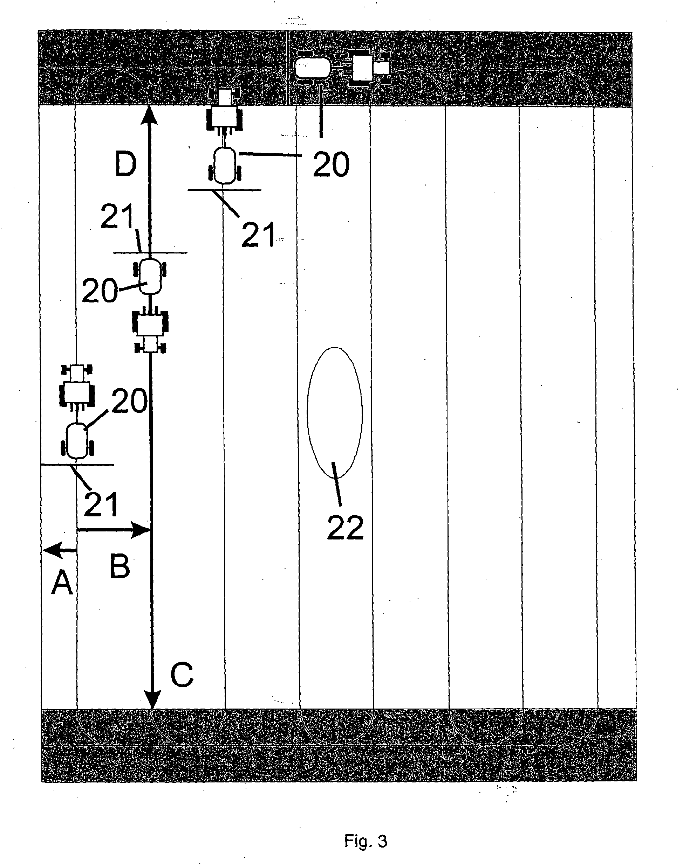

Bei dem Ausführungsbeispiel nach Fig. 3 ist das Bearbeiten des Feldes mit einer Feldspritze 20, die ein Gestänge 21 aufweist dargestellt. Auch hier werden die vor beschriebenen Abstände A, B, C, D gemäß Fig. 2 von dem geographischen Modul 1 ermittelt und dem maschinenspezifischen Modul 2 mitgeteilt.

Auch die Lage der Sperrflächen 22 wird von dem geographischen Modul 1 erkannt. Bei Erreichen dieser Sperrflächen 22 bzw. die Lage dieser Sperrfläche 22 werden entsprechend an das maschinenspezifische Modul 2 übermittelt.

Beim Ausbringen von Dünger mit einem Schleuderdüngerstreuer 15 gemäß Fig. 2 wird der Dünger in Breitverteilung in Form eines Streufächers 23, wie schematisch dargestellt, verteilt. Das geographische Modul 1 erhält von dem maschinenspezifischen Modul 2 die geographischen Abmessungen. des angeschlossenen Gerätes. Mit Hilfe der vom geometrischen Modul 1 gemessenen GPS-Position, der Richtung, in welcher sich das Fahrzeug bzw. die Arbeitsmaschine bewegt, und der Fahrgeschwindigkeit wird die "kommende" Bearbeitungsfläche auf markante Stellen überwacht. Wenn die Maschine 15, 20 an das Vorgewende 18, 19 kommt wird die Vorgewendefläche erkannt. Wenn die Maschine 15, 20 an die Sperrfläche 22 kommt, wird diese ebenfalls erkannt. Weiterhin können andere Hindernisse, zu denen auch Sperrflächen 22 gehören, erkannt werden. Auch schon bearbeitete Flächen werden erkannt. Bei der Fahrt durch das Vorgewende 18, 19 und an der Feldrandgrenze 17, wie in Fig. 2 dargestellt, wird die Ausbringmenge und die Wurfweite für die Düngerkörner durch entsprechende Einstellung des Düngerstreuers 15 aufgrund der von den maschinenspezifischen Modul 2 angesteuerten Stellelemente des Düngerstreuers 15 reduziert, so dass der Randstreifen nur reduziert gedüngt wird.

Wenn die Maschine 16 mit dem Düngerstreuer 15 das Vorgewende 18, 19 erreicht, wird dies von dem geographischen Modul 1 erkannt und dem maschinenspezifischen Modul 2 mitgeteilt, so dass zum richtigen Zeitpunkt von dem maschinenspezifischen Modul 2 die Stell- oder Schaltelemente der Dosierorgane des Düngerstreuers 15 angesteuert werden, so dass rechtzeitig die Düngerzufuhr unterbrochen wird. Wenn die Maschine nach dem Wenden am Feldende das Vorgewende wieder verlässt und in das Feldinnere fährt, wird dies von dem geographischen Modul 1 erkannt und entsprechende Daten werden an das maschinenspezifische Modul 2 übermittelt, so dass das maschinenspezifische Modul 2 zum richtigen Zeitpunkt entsprechende Signale an die Schalt- und Stellelemente der Dosierorgane sendet, damit zum richtigen Zeitpunkt die Düngerzufuhr zu den Ausbringelementen erfolgt damit in richtiger Weise das Feld gedüngt wird.

Um diese Informationen zu übermitteln, wird nach folgenden Gedanken vorgegangen. Das geographische Modul 1 ermittelt die tatsächliche Position über GPS-Daten und den Abstand zu den markanten Stellen. Diese Daten werden von dem geographischen Modul 1 an das maschinenspezifische Modul 2 übermittelt, so dass das maschinenspezifische Modul 2 die Stell- und Schaltelemente des Anbaugerätes entsprechend ansteuern und regeln kann, damit das Anbaugerät situationsbezogen darauf reagiert. Im einfachsten Fall wird nur die Distanz zeitlich oder räumlich dem maschinenspezifischen Modul 2 des Anbaugerätes 15 mitgeteilt. Handelt es sich um eine Vorgewendefläche 18, 19, wird beim Eintreffen des Ereignisses die Vorgewendeautomatik bzw. Sequenz von dem maschinenspezifischen Modul 2 gestartet. Handelt es sich um eine Sperrfläche 22, werden die Aggregate situationsbezogen ab- oder zugeschaltet. Handelt es sich um ein Hindernis, wird auch dieses von dem maschinenspezifischen Modul 2 situationsbezogen verarbeitet, so dass entsprechende Schalt-und Stellelemente angesteuert werden, damit das Anbaugerät situationsbezogen handelt, z.B. Einklappen des Gestänges 21 oder Ausheben des Aggregates. Wird eine bereits bearbeitete Fläche erkannt, wird durch zu- oder abschalten von Teilaggregaten eine doppelte Bearbeitung vermieden.

Das geographische Modul 1 ermittelt die zeitliche geographische Distanz der markanten Stelle und teilt diese kontinuierlich dem maschinenspezifischen Modul mit. Das maschinenspezifische Modul 2 veranlasst dann durch entsprechend in seinem Speicher hinterlegte Intelligenz, dass die entsprechenden Aktionen von den Anbaugeräten 15 durchgeführt werden.

In dem geographischen Modul 1 sind in dem Farmmanagementsystem, Informationen über Hindernisse 22 oder Sperrflächen oder anderer markanter Stellen hinterlegt. Informationen über diese Hindernisse 22 erhalten neben ihrer Position im Feld auch noch die Parameter, z.B. umfahrbar, überfahrbar, Gefahrenabstand usw.. Mit diesen Informationen, die an das maschinenspezifische Modul 2 übermittelt werden, werden dann von dem maschinenspezifischen Modul 2 entsprechende Aktionen veranlasst, wie z.B. Aggregat ausheben, Dosierorgan ein- oder ausschalten, Dosierorganeinstellung ändern, Ausleger einklappen usw.

In dem geographischen Modul 1 wird in einem Speicher die bearbeitete Fläche permanent aufgezeichnet. Wird als markante Stelle die bereits abgearbeitete Fläche erkannt, wird sie zur Vermeidung von Doppelbearbeitung wie eine Sperrfläche 22 angesehen. Die entsprechende Information wird das maschinenspezifische Modul 2 übermittelt, so dass maschinenspezifische Modul 2 entsprechend die Maschine ansteuern oder regeln kann, damit das Gerät dann entsprechend reagiert.

Die in Fig. 2 angelegten Fahrgassen können durch das geographische Modul 1 automatisch erkannt werden und dem maschinenspezifischen Modul 2 entsprechend mitgeteilt und übergeben werden. Diese Information über die Fahrgassensequenz kommt entweder aus der Farmmanagementsoftware oder wird "on the go" auf dem Feld erzeugt. Auch diese Informationen, wie die Fahrgassen auf dem Feld liegen, werden situationsbezogen dem maschinenspezifischen Modul 2 mitgeteilt. Die Fahrgassen können natürlich auch in dem geographischen Modul 1 oder dem maschinenspezifischen Modul 2 aufgezeichnet werden, um so z.B. Folgearbeiten z.B. Spritzen oder Düngerstreuer als Abarbeitungs- oder Lenkungsempfehlung genutzt werden.

Sind von dem Farmmanagement keine Fahrgassenmodelle vorgegeben, kann auf dem Feld automatisch die Fahrgassensequenz von dem geographischen Modul 1 aufgrund eines entsprechend abgespeicherten Programms ermittelt werden. Eingangsgrößen hierzu sind die aktuellen GPS-Position und die GPS-Aufzeichnung der vorherigen Fahrspuren bzw. eine Generierung z.B. aus einer umfahrenden Kontur des Feldes. Bei Verwerten von Fahrgassenmodellen aus der Farmmanagementsoftware wird das Fahrgassenmodell aus der Farmmanagementsoftware genommen. Somit können z.B. jedes Jahr immer wieder die gleichen Fahrgassen angelegt und benutzt werden.

Aufgrund der aktuellen Position des Gerätes kann eine Fahrgassensequenz abgeleitet werden, so dass die Fahrgassensequenz automatisch erkannt wird. Dieses geschieht von dem geographischen Modul, welches die Daten dann an das maschinenspezifische Modul weiter gibt. Das maschinenspezifische Modul kann dann die Aggregate schalten, wie z.B. Spuranreißer, Fahrgassenautomatik oder Auflaufmarkierung einer Sämaschine zum Anlegen der Fahrgassen. Diese Fahrgassen werden in dem geographischen Modul 1 aufgezeichnet und in der Farmmanagementsoftware ausgewertet, damit für Folgearbeiten diese Informationen verwendet werden können. Folgearbeiten sind z.B. Dünger streuen mit einem Schleuderdüngerstreuer oder Ausbringen vom Pflanzenschutzmitteln mit einer Feldspritze.

Das geographische Modul 1 kann Informationen der geplanten Abarbeitung enthalten und gibt diese an das Guidance'- / Lenksystem des Ackerschleppers weiter, so dass die Maschine entsprechend dieser Daten automatisch geführt werden können. Diese Informationen der Abarbeitung kann in der Farmmanagementsoftware geplant werden oder auch "on the go" erzeugt werden, indem der vorgegebene Abstand zu der Feldrandgrenze oder der vorhergehenden Bearbeitungsbahn ermittelt und entsprechend danach das Guidance- / Lenksystem die Maschine entsprechend steuert.

Das Planen der Abarbeitungsspur in der Farmmanagementsoftware hat den Zweck und den Vorteil, dass z.B. jedes Jahr das Feld identisch abgearbeitet werden kann.

Falls keine geplante Abarbeitungsspur vorliegt kann die Solllinie auch "on the go" mittels umfahrender Außenkontur durch den Schlepper mit dem graphischen Modul 1 automatisch erzeugt werden.

Das elektronische Maschinenmanagementsystem mit dem geographischen Modul 1 und dem maschinenspezifischen Modul 2 lässt sich durch eine entsprechend intelligente Verknüpfung durch das vom Schlepperterminal gebildete geographische Modul 1 und dem vom Jobcomputer des Arbeitsgerätes gebildeten maschinenspezifischen Modul verwirklichen. Hierbei sind entsprechende Programme und Datenteile in dem Speicher des jeweiligen Moduls zu hinterlegen.
Das elektronische Maschinenmanagementsystem lässt bei selbstfahrenden sowie gezogenen und angehängten Arbeitsmaschinen, wie beispielsweise Mähdrescher, Feldhäcksler, Heu- und Mähmaschinen, Düngerstreuern, Sämaschinen, Feldspritzen, Bodenbearbeitungsgeräten und - maschinen, etc. einsetzen.

## Patentansprüche

1. Elektronisches Maschinen-Management-System zum Positionsgenauen Einleiten von Schalt- und Stellvorgängen bei landwirtschaftlichen Arbeitsmaschinen, die ein geographisches Modul zum Ermitteln der aktuellen Position und aus der Informationen über Positionen von markanten Felddaten, Ausbringmengen, Feldgrenzen, bearbeitete und/oder Sperrflächen, etc. enthält, und einem maschinenspezifischen Modul, welches maschinenspezifische Funktionen enthält, wobei das geographisches Modul (1) dem maschinenspezifischen Modul (2) die geographischen Informationen (1) in Echtzeit mitteilt und das maschinenspezifische Modul (2) hieraus in Echtzeit die maschinenspezifischen Schalt- und Stellvorgänge generiert und entsprechende Signale an die jeweiligen Schalt- und Stellelemente sendet.

2. System nach Anspruch 1, **dadurch gekennzeichnet, dass** die geographischen Informationen zeitliche und/oder geographische Abstände zu Feldgrenzen benachbarter Fahrgassen (12), benachbartem Bearbeitungsbereich, zum Vorgewende (18, 19), zu Sperrflächen (22) und/oder Hindernissen beinhalten.

3. System nach Anspruch 1, **dadurch gekennzeichnet, dass** in dem Speicher des geographischen Moduls (1) ein Programm abgespeichert ist, welches aufgrund der momentanen Fahrgeschwindigkeit und Richtung vorausschauend den zeitlichen und/oder geographischen Abstand zum nächsten markanten Ereignis berechnet.

4. System nach einem oder mehreren der vorstehenden Ansprüche, **dadurch gekennzeichnet, dass** das geographische Modul zur Erkennung der markanten Stellen vom maschinenspezifischen Modul die geometrischen Abmessungen über die markante Stelle erhält, dass mit Hilfe der gemessenen GPS-Position, der Richtung und/oder der Fahrgeschwindigkeit die "kommende" Bearbeitungsfläche auf markante Flächen überwacht wird.

5. System nach einem oder mehreren der vorstehenden Ansprüche, **dadurch gekennzeichnet, dass** die Information über die Arbeitsbreite der Maschinen, die Arbeitsbreiten der nachfolgenden Maschinen, wie Submaschinen, Düngerstreuer, Feldspritze mit ihren Eigenschaften, wie einklappbar, aushebbar in den maschinenspezifischen Modul (2) hinterlegt sind.

6. System nach einem oder mehreren der vorstehenden Ansprüche, **dadurch gekennzeichnet, dass** das geographische Modul (1) die GPS-Position, die Richtung und/oder die Fahrgeschwindigkeit mit einem GPS-Empfänger oder einer Onboard-Sensorik ermittelt.

7. System nach einem oder mehreren der vorstehenden Ansprüche, **dadurch gekennzeichnet, dass** durch die GPS-Position, die Richtung und/oder die Fahrgeschwindigkeit die "kommende" Bearbeitungsfläche vorausberechnet wird und so die markanten Stellen (18, 19, 22) ermittelbar sind.

8. System nach einem oder mehreren der vorstehenden Ansprüche, **dadurch gekennzeichnet, dass** entsprechend der Information der markanten Stellen (18, 19, 22) das maschinenspezifische Modul (2) das Anbaugerät (16, 20) situationsbezogen steuert.

9. System nach einem oder mehreren der vorstehenden Ansprüche, **dadurch gekennzeichnet, dass** von dem geographischen Modul (1) dem maschinenspezifischen Modul (2) kontinuierlich die zeitliche oder die geographische Distanz zu der(n) markanten Stelle(n) mitteilt wird, und dass bei Erreichen dieser markanten Stelle (22) das maschinenspezifische Modul (2) durch eine entsprechend im maschinenspezifischen Modul (2) hinterlegten Intelligenz die entsprechende Information ausführt.

10. System nach einem oder mehreren der vorstehenden Ansprüche, **dadurch gekennzeichnet, dass** bei Erkennen eines Vorgewendes (18, 19) durch das geographische oder maschinenspezifische System ein Vorgewende, wird durch das maschinenspezifische Modul (2) situationsbezogen die Vorgewendeautomatik oder eine Sequenz gestartet wird.

11. System nach einem oder mehreren der vorstehenden Ansprüche, **dadurch gekennzeichnet, dass** bei Erkennen einer markanten Stelle (18, 19, 22) durch das geographische oder maschinenspezifische Modul (2), durch das maschinenspezifische Modul die entsprechenden Maschinenteile automatisch ein- oder ausschaltbar sind.

12. System nach einem oder mehreren der vorstehenden Ansprüche, **dadurch gekennzeichnet, dass** bei Erkennen eines Hindernisses (22) durch das geographische (1) oder maschinenspezifische Modul (2) das geographische oder maschinenspezifische Modul veranlasst, dass die Maschine das Hindernis umfährt oder überfährt und/oder aufgrund dieser Information die Aggregate aushebt bzw. die Ausleger einklappt oder Maschinenteile abschaltet.

13. System nach einem oder mehreren der vorstehenden Ansprüche, **dadurch gekennzeichnet, dass** in dem geographischen (1) und maschinenspezifischen Modul (2) in einem Speicher des Moduls (1, 2) die bearbeitete Fläche permanent aufgezeichnet wird, und falls als markante Stelle eine bereits abgearbeitete Fläche erkannt wird, diese zur Vermeidung von Doppelbearbeitung als eine Sperrfläche (22) angesehen wird und das maschinenspezifische Modul entsprechend reagiert.

14. System nach einem oder mehreren der vorstehenden Ansprüche, **dadurch gekennzeichnet, dass** das geographische Modul (1) oder das maschinenspezifische Modul (2) die Fahrgassensequenz automatisch erkennt und diese dem maschinenspezifischen Modul entsprechend übergibt.

15. System nach einem oder mehreren Ansprüchen, **dadurch gekennzeichnet, dass** die Information der Fahrgassensequenz entweder aus der Farmmanagement entnommen oder "on the go" auf dem Feld durch das geographische Modul (1) erzeugt wird.

16. System nach einem oder mehreren der vorstehenden Ansprüche, **dadurch gekennzeichnet, dass** in dem geographischen Modul (1) oder dem maschinenspezifischen Modul (2) die Lage der Fahrgassen (12) aufgezeichnet und in der Farmmanagementsoftware ausgewertet wird.

17. System nach einem oder mehreren der vorstehenden Ansprüche, **dadurch gekennzeichnet, dass** das geographische Modul (1) dem Guidance-/Lenksystem Informationen über die geplante Abarbeitung gibt und die Maschine entsprechend danach auf dem Feld führt.
